# EUROPEAN PATENT APPLICATION

(11) **EP 2 284 450 A1**
(43) Date of publication of application: **16.02.2011**
(21) Application number: 09728719.7
(22) Date of filing: 01.04.2009
(51) Int. Cl.: F24J 2/05, F24J 2/46

(54) **SEALED MECHANICAL CONNECTION BETWEEN GLASS AND METAL FOR RECEIVER TUBES USED IN SOLAR PLANTS**

(30) Priority: 03.04.2008 ES 200800930
(71) Applicant: Abengoa Solar New Technologies, S.A., 41018 Sevilla (ES)
(72) Inventor: CANTERO GUTIERREZ, Felipe, E-41018 SEVILLA (ES); GOMEZ ROJO, Borja, E-41018 SEVILLA (ES); MARTINEZ SANZ, Noelia, E-41018 SEVILLA (ES); SEDANO GARCIA, Angel, E-41018 SEVILLA (ES); GOIKOETXEA LARRINAGA, Jose, E-41018 SEVILLA (ES); VILLASANTE CORREDOIRA, Cristóbal, E-41018 SEVILLA (ES)
(74) Representative: Garcia-Cabrerizo y del Santo, Pedro Maria
(86) International application number: PCT/ES2009/000177
(87) International publication number: WO 2009/121987

(57) **Abstract**

The invention relates to a sealed mechanical connection between glass and metal for receiver tubes used in solar plants of the type using a heat-transfer fluid, which uses a mechanical force in order to establish the seal between the inner metal tubes and the outer glass tubes, between which tubes a high vacuum is established in order to prevent heat losses. According to the invention, a flexible, deformable metal joint is used for the above-mentioned seal, which joint, when duly compressed, adapts to the corresponding surfaces of the tubes to be sealed, thereby establishing the seal between the respective tubes. In addition, the invention can include a continuous system for maintaining the necessary vacuum between both types of tubes.

## Description

The present invention, intended to be protected as Invention Patent, relates to a more reliable connection procedure between a glass and another metal tube in the manufacturing of receiver tubes used in solar plants in their different applications: power generation, heat production for heating and solar fuel production, as well as in various thermochemical processes.

### BACKGROUNDS OF TEH INVENTION:

Although the connection between a glass (brittle) and a metal (ductile) is a problem solved by the welding technique, much used, especially in the electronics field, when this technique is intended to be used in macro bodies, subjected to continuous temperature changes, breakages due to different expansion coefficients of one and other material are caused in the connections.

The absorber or receiver tubes are responsible for collecting the concentrated thermal energy of the sun thereon, whereby a heat-transfer fluid is flowed, which absorbs said energy to be subsequently used as energy source.

Solar plants operate at maximum temperatures close to 400°C. Due to the daily discontinuity of the energy resource, the sun, the absorber tubes are subjected to temperature changes between day and night ranging from 400°C and 0°C. This makes parts constituting the receiver tubes to be subjected to strong thermal stresses.

Currently, the absorber tubes are formed by metal tubes through which flows a thermal fluid that absorbs the concentrated energy from the sun. Coaxially to them, glass tubes, made of borosilicate, and metal pieces, revolution bellows-shaped are arranged, which are connected through their outer circumference to glass tubes and through their inner circumference to metal tubes, thus enclosing spaces between both types of tubes (glass and metal). In said spaces, high vacuums are performed, thereby reducing heat losses characteristic of the high temperatures reached by the corresponding devices, thus making both receptors and solar plants more efficient. Due to the need of maintaining high vacuums, a completely sealed system between the described parts is required.

Currently, the sealing system, which allows the vacuum to be maintained inside the mentioned space, consists of a welded connection between the glass tube, made of borosilicate, and a metal piece, made of a material called Kovar® (alloy of iron, nickel and cobalt). This piece is backwardly connected to a bellows preventing the stresses to which the tube is subjected from affecting the connection.

This type of welded connection has breakage problems, in a low percentage of joints, but in significant amounts. When a breakage of the joint is produced, there is a sudden vacuum loss inside the tube and, at normal working temperatures and contacting the oxygen of the air, the selective coating of the inner metal tube is irreversibly damaged. Thus, after a breakage of this kind, the whole system is useless and must be replaced.

### DESCRIPTION OF THE INVENTION:

To avoid the previous problems, the invention that is then set forth provides a connection between glass and metal maintaining the high required vacuum levels, with a very considerable reliability and durability. On the other hand, in case of failure, the sealing system will experience a progressive, and not sudden reduction of the vacuum level between the corresponding pats, which in many cases can prevent the irreversible damage of the respective device, as will be explained later.

The concept of sealed mechanical connection of the invention is based on the use of a flexible metal joint for high vacuum, called Helicoflex®, responsible for absorbing the force exerted by mechanical elements between a glass flange and a set of metal pieces. The flexible metal joint provides the property of adapting to surfaces to which it makes contact, thus causing the needed sealing.

The inside vacuum will be performed, according to the desired level, by using any of the different conventional methods for this purpose, being able to be performed through a olive hole in the glass, or through a valve mounted on the metal sealing flange.

On the other hand in case of failure, the sealing system undergoes a progressive reduction of the vacuum level, always less than one atmosphere, a continuous system for maintaining the vacuum may eventually be provided, thus preventing the complete replacement of the tube in the event of failure in the sealing.

### DESCRIPTION OF THE DRWAINGS:

For a better understanding of the invention, two figures are attached representing the following:
In Figure 1, a view of an absorber tube of conventional type, and
In Figure 2, a view of an absorber tube according to the present invention.

In these, references appearing therein have the following meanings:
1.- Inner metal tube.
2.- Outer glass tube.
3.- Connection metal bellows.
4.- Flexible metal joint.
5.- Glass flange.
6.- Set of metal pieces.

### DESCRIPTION OF A PREFERRED EMBODIMENT:

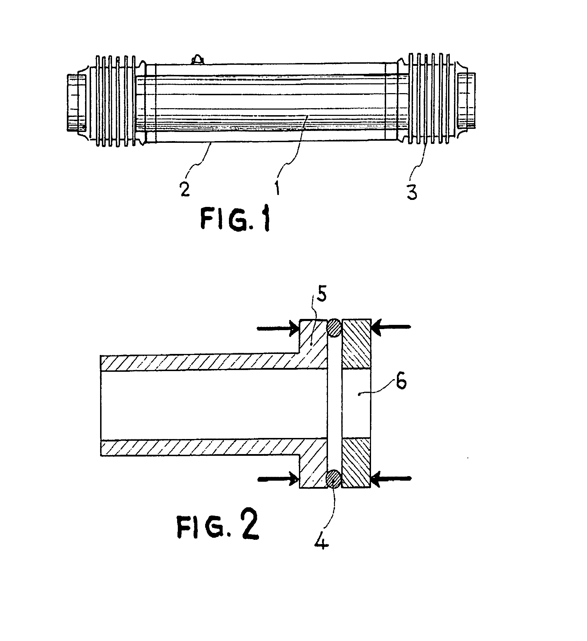

By trying to overcome the aforementioned drawbacks for conventional absorber tubes, such as that showed in Figure 1, in which the outer metal tube (1) and the inner glass tube (2), both coaxial, are connected through a metal bellows made of a material called Kovar®, the invention proposes, as a preferred embodiment, according to that depicted in Figure 2, the use of a flexible metal and adaptable by compression joint, of the type called Helicoflex® (4), located between the glass flange (5) and a set of metal pieces (6), thus ensuring the desirable seal between one and other, between which a high vacuum is established, which can eventually be maintained using an adequate continuous system mounted for this purpose.

There is no need to extend this description to any skilled in the art understands the scope of the present invention, as well as the technical effects and new benefits that may arise from this.

The terms in which the present specification has been written should always be taken in the broadest and less restrictive sense to be compatible with the essence of the invention therein described and claimed.

## Claims

1. Sealed mechanical connection between glass and metal for receiver tubes used in solar plants, of the type using a heat-transfer fluid, **characterized in that** it uses a mechanical force in order to establish the seal between the inner metal tubes and the outer glass tubes.

2. Sealed mechanical connection between glass and metal for receiver tubes used in solar plants, according to claim 1, **characterized in that** it uses flexible, deformable metal joints, duly compressed, in order to maintain the vacuum between both types of tubes.

3. Sealed mechanical connection between glass and metal for receiver tubes used in solar plants, according to claims 1 and 2, **characterized in that** it eventually uses a continuous system for maintaining the necessary vacuum between both types of tubes.
